# EUROPÄISCHE PATENTSCHRIFT

(11) **EP 2 940 433 B1**
(45) Veröffentlichungstag und Bekanntmachung des Hinweises auf die Patenterteilung: **30.12.2015**
(21) Anmeldenummer: 14166426.8
(22) Anmeldetag: 29.04.2014
(51) Int. Cl.: G01D 11/24

(54) **Sensor mit Klemmkörper**
Sensor with clamping body
Capteur doté d'un corps de serrage

(43) Veröffentlichungstag der Anmeldung: 04.11.2015
(73) Patentinhaber: SICK AG, 79183 Waldkirch (DE)
(72) Erfinder: Selinger, Andreas, 79341 Kenzingen (DE)
(74) Vertreter: Rieger, Daniel-Stephan

(56) Entgegenhaltungen:
- EP-A2- 1 367 263
- DE-A1- 19 648 679
- DE-A1-102004 001 788
- DE-A1-102006 007 951
- DE-A1-102009 026 806
- DE-U1-202005 015 088

## Beschreibung

Die vorliegende Erfindung betrifft einen Sensor mit Klemmkörper.

Die DE 103 13 697 A1 offenbart eine Sensorhalterungsvariante mit durch Filmscharniere beweglich angeordneten Spannblöcken, wobei sich die Halterung von oben durch eine Spaltöffnung in eine T-förmig ausgebildete Nut bündig einlegen lässt.

Die DE 199 53 186 A1 offenbart einen Zylinderschalter, der mit Hilfe einer besonders ausgebildeten Befestigungseinrichtung aus wenigstens zwei spreizbaren Federzungen, welche auch einstückig ausgebildet sein können, in einer T-förmigen-Nut eines Maschinenteils, insbesondere eines Arbeitszylinders fixierbar ist. Die Federzungen sind aus Metall hergestellt und weisen einen in das Schaltergehäuse einspritzbaren Sockel, einen abschnittsweise aus dem Schaltergehäuse hervortretenden Gelenkabschnitt und einen sich daran anschließenden Kopf auf. Die Abmessungen der Federelemente sind auf die Nut derart abgestimmt, dass der Zylinderschalter in seiner Lösestellung durch die Öffnung der Nut hindurch radial einsetzbar bzw. entnehmbar ist.

Die Sensoren nach dem Stand der Technik eignen sich lediglich für eine Befestigung in einer T-förmigen Befestigungsnut.

Eine Aufgabe der Erfindung besteht darin, eine einfachere Befestigung eines Sensors für beliebige Nutgeometrien bereitzustellen. Weiter besteht die Aufgabe darin, einen Sensor bereitzustellen, der weniger störanfällig ist, insbesondere elektrisch bzw. elektronisch weniger störanfällig ist.

Die Aufgabe wird gemäß Anspruch 1 gelöst durch einen Sensor mit einem Sensorgehäuse, wobei das Sensorgehäuse oder ein Teil des Sensorgehäuses in eine Befestigungsnut in einem metallischen Befestigungskörper ragt zur Befestigung des Sensors, wobei an dem Sensorgehäuse ein spreizbarer metallischer Klemmkörper vorgesehen ist, wobei der Klemmkörper Mittel zur Spreizung aufweist, wobei der Klemmkörper mit einem definierten elektrischen Potential des Sensors verbunden ist.

Durch die Erfindung wird ein definiertes elektrisches Potential mit dem Sensor verbunden. Dadurch ist gewährleistet, dass zwischen dem Klemmkörper und dem Befestigungskörper keine Isolierung besteht und so beispielsweise keine unterschiedlichen elektrischen Potentiale zwischen dem Sensor und dem Befestigungskörper sich bilden können. Dadurch wird die elektromagnetische Verträglichkeit des Sensors deutlich verbessert.

Bei dem Sensor handelt es sich bevorzugt um einen magnetischen Sensor, insbesondere um einen magnetischen Positions- oder Wegesensor. Jedoch kann der Sensor auch ein kapazitiver oder induktiver Sensor sein.

In Weiterbildung der Erfindung ist das definierte Potential ein Erdungspotential. Gemäß dieser Weiterbildung sind der Sensor und der Befestigungskörper mit dem Erdungspotential verbunden, wodurch die elektromagnetische Verträglichkeit des Sensors verbessert ist.

In Weiterbildung der Erfindung ist das Mittel zur Spreizung aus Metall und mit dem definierten elektrischen Potential des Sensors verbunden. Beispielsweise ist eine Aufnahme des Mittels zur Spreizung metallisch ausgeführt und mit einem definierten elektrischen Potential des Sensors verbunden. Diese Verbindung ist einfach möglich, da beispielsweise die Aufnahme direkt mit einem Kontakt der Leiterplatte verbunden sein kann. Das Mittel zur Spreizung ist dann durch die Aufnahme mit dem elektrischen Potential verbunden und der Klemmkörper ist über das Mittel zur Spreizung mit dem elektrischen Potential verbunden.

In einer bevorzugten Ausführung ist das Mittel zur Spreizung ein Spreizgewindestift. Ein Spreizgewindestift oder auch Spreizschraube wird in einer Aufnahme mit Gewinde geführt und durch Drehen des Spreizgewindestifts wird der Klemmkörper auseinander gedrückt und gegen die Befestigungsnutwand gedrückt, wodurch der Sensor befestigt wird. Wird der Spreizgewindestift wieder zurückgedreht gehen die Spannbacken des Klemmkörpers durch eine elastische Ausbildung wieder zurück in ihre ursprüngliche Lage, wodurch der Sensor wieder von dem Befestigungskörper gelöst wird.

In einer alternativen Ausführungsform ist das Mittel zur Spreizung ein Spreizstift. Im Unterschied zum Spreizgewindestift weist der Spreizstift kein Gewinde auf, sondern wird verschiebbar in der Aufnahme geführt. Wird der Spreizstift beispielsweise in Richtung des Klemmkörpers gedrückt, so wird der Klemmkörper auseinandergedrückt und gegen die Befestigungsnutwände des Befestigungskörpers gedrückt, wodurch der Sensor in der Nut gehalten ist. In dieser Position ist der Spreizstift beispielsweise arretierbar ausgebildet. Wird der Spreizstift dagegen aus dem Klemmkörper herausgezogen, so gehen die Spannbacken des Klemmkörpers durch eine elastische Ausbildung wieder zurück in ihre ursprüngliche Lage, wodurch der Sensor wieder von dem Befestigungskörper gelöst wird.

In Weiterbildung der Erfindung ist die Befestigungsnut U-förmig ausgebildet. Eine U-förmige-Nut ist einfacher herstellbar als eine T-förmige-Nut, da die U-förmige Nut keine Hinterschnitte aufweist. Gemäß der Erfindung wird der Sensor allein durch die Klemmkraft, also durch einen Kraftschluss in der Nut gehalten. Ein Formschluss ist dabei nicht notwendig. Dadurch, dass der Sensor durch die Klemmkraft in der Befestigungsnut gehalten ist, wird kein Hinterschnitt benötigt, um den Sensor in der Nut zu befestigen.

In Weiterbildung der Erfindung ist der Klemmkörper austauschbar angeordnet. Dadurch können Klemmkörper mit unterschiedlichen Abmessungen für unterschiedliche Befestigungsnuten eingesetzt werden. Dadurch kann der Sensor in verschiedenen Nuten einfach befestigt werden. Beispielsweise kann der Sensor dadurch auch in jeder beliebigen Befestigungsnut, insbesondere in einer T-förmigen oder C-förmigen Nut befestigt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor mit einem Sensorgehäuse in einer Befestigungsnut, wobei der Klemmkörper nicht festgeklemmt ist;
- Figur 2: einen festgeklemmten Sensor mit einem Sensorgehäuse in einer Befestigungsnut;
- Figur 3: einen Sensor mit zwei Klemmkörpern, wobei je ein Klemmkörper an je einem Ende des Sensorgehäuses angeordnet ist.

In den nachfolgenden Figuren sind identische Teile mit identischen Bezugszeichen versehen.

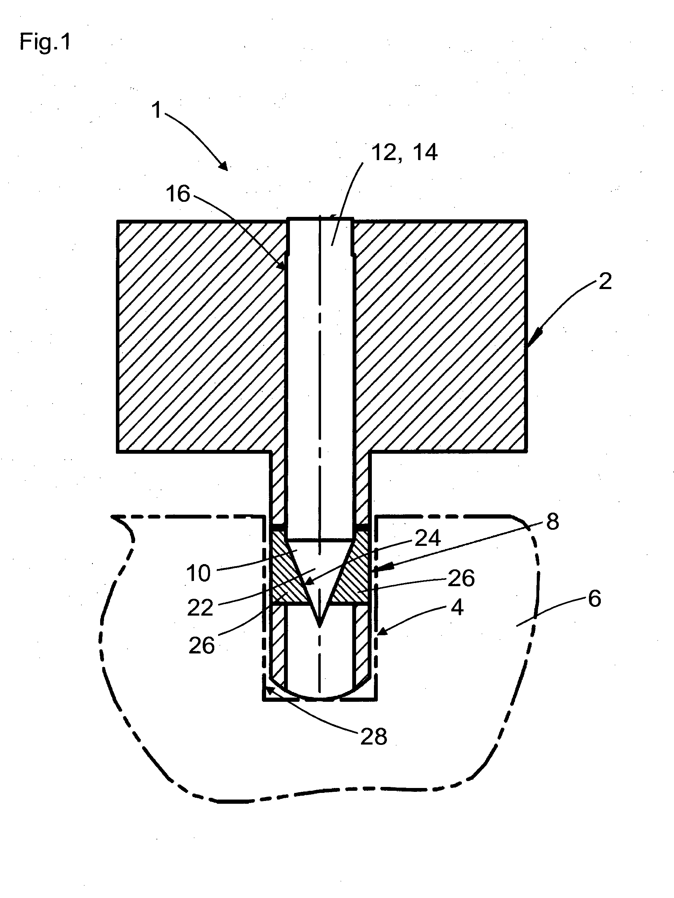

Figur 1 zeigt einen Sensor 1 mit einem Sensorgehäuse 2, wobei das Sensorgehäuse 2 oder ein Teil des Sensorgehäuses 2 in eine Befestigungsnut 4 in einen metallischen Befestigungskörper 6 ragt, zur Befestigung des Sensors 1, wobei an dem Sensorgehäuse 2 ein spreizbarer metallischer Klemmkörper 8 vorgesehen ist, wobei der Klemmkörper 8 Mittel zur Spreizung 10 aufweist, wobei der Klemmkörper 8 mit einem definierten elektrischen Potential des Sensors 1 verbunden ist.

Der Sensor 1 und die Befestigungsnut 4 ist gemäß Figur 1 in einem Querschnitt dargestellt. Der Sensor 1 weist dabei im Querschnitt ein T-förmiges Sensorgehäuse 2 auf. In dem Sensorgehäuse 2 ist eine Aufnahme 16 für den Spreizstift 14 oder den Spreizgewindestift 12 vorgesehen. Im Falle des Spreizgewindestifts 12 weist die Aufnahme 16 ein Innengewinde auf, in dem der Spreizgewindestift 12 geführt ist. Die Befestigungsnut 4 ist beispielsweise U-förmig ausgebildet und weist keinen Hinterschnitt auf. Das Sensorgehäuse 2 kann direkt in die Befestigungsnut 4 eingesetzt werden.

Der Spreizgewindestift 12 bzw. der Spreizstift 14 weist an einem Ende Betätigungsmittel auf, beispielsweise einen Schlitz oder eine kreuzförmige Einkerbung für einen Schraubendreher oder eine Inbus- oder Torx-Aufnahme für einen entsprechenden Schlüssel. Das andere Ende des Spreizgewindestifts 12 bzw. des Spreizstifts 14 weist ein kegelförmiges Ende 22 auf. Das kegelförmige Ende 22 liegt in einer kegelförmigen Ausnehmung 24 des Klemmkörpers 8. Die kegelförmige Ausnehmung 24 des Klemmkörpers 8 weist dabei einen Schlitz auf, wodurch zwei Spannbacken 26 gebildet werden, zwischen denen das kegelförmige Ende 22 des Spreizgewindestifts 12 oder des Spreizstifts 14 angeordnet ist.

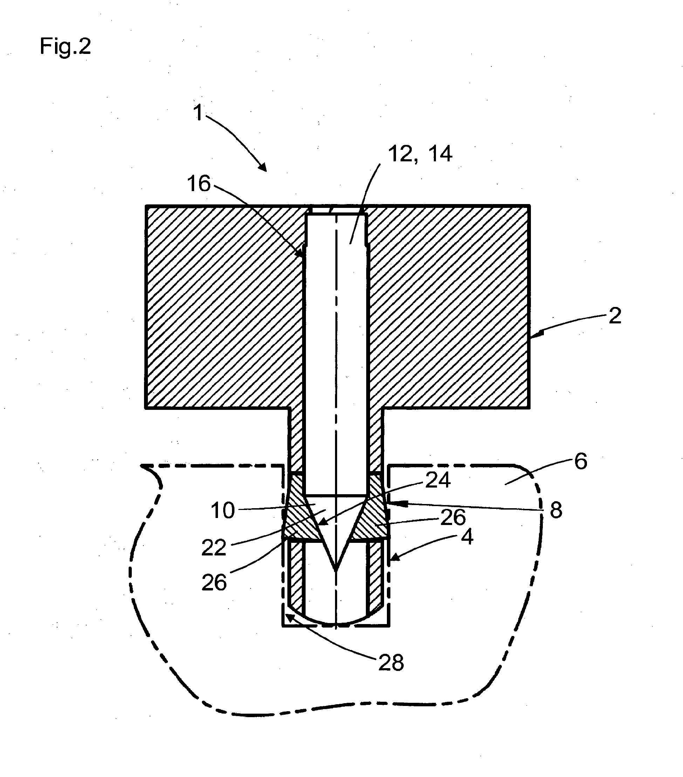

Wird nun gemäß Figur 2 der Spreizgewindestift 12 durch Drehen in Richtung des Klemmkörpers 8 bewegt, so spreizen sich die Spannbacken 26 und werden gegen die Nutwand 28 des Befestigungskörpers 6 gedrückt, wodurch das Sensorgehäuse 2 in der Befestigungsnut 4 des Befestigungskörpers 6 fixiert wird. Im Fall des Spreizgewindestifts 12 ist der Spreizgewindestift 12 allein durch Reibkräfte in diese Stellung fixiert. Der Sensor 1 selbst ist auch lediglich durch einen Kraftschluss zwischen den Spannbacken 26 und der Nutwand 28 fixiert.

Um die Kraftschlussverbindung zu erhöhen, ist es vorgesehen, den Spreizkörper im Klemmbereich mit einer Oberflächenstruktur auszubilden.

Bei der Verwendung eines Spreizstifts 14 wird dieser in Richtung der Längsachse des Spreizstifts 14 in der Aufnahme 16 geführt und drückt die Spannbacken 26 des Klemmkörpers 8 auch durch ein kegelförmiges Ende 22 auseinander, so dass die Spannbacken 26 gegen die Nutwände 28 gedrückt werden. Der Spreizstift 14 wird in dieser Position durch Arretiermittel fixiert. Werden die Arretiermittel gelöst, kann der Spreizstift 14 wieder aus der kegelförmigen Aufnahme 24 des Klemmkörpers 8 herausgezogen werden, wodurch die Spannbacken 26 des Klemmkörpers 8 nicht mehr gegen die Nutwand 28 gedrückt sind und der Sensor 1 aus der Befestigungsnut 4 herausgenommen werden kann.

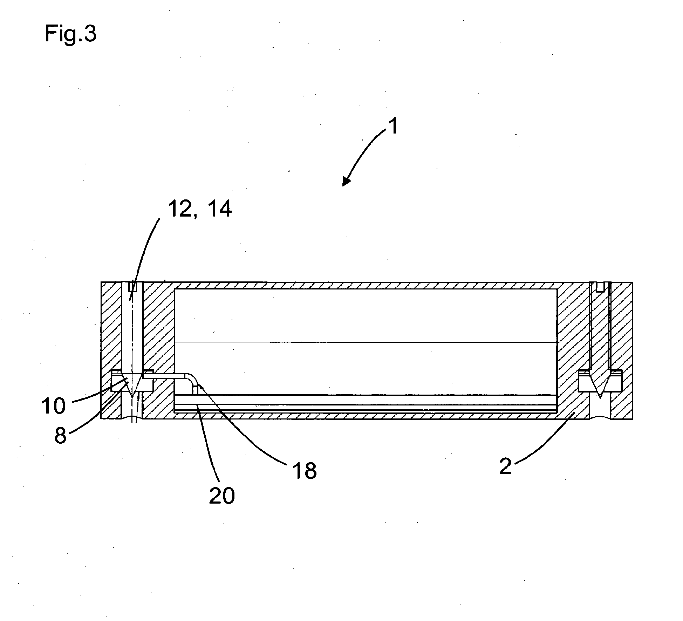

Figur 3 zeigt die erfindungsgemäße Verbindung des Klemmkörpers 8 mit einem elektrischen Potential des Sensors 1. Der Klemmkörper 8 ist dabei mit einer elektrischen Verbindung 18 mit der Leiterkarte 20 verbunden. Die elektrische Verbindung 18 kann dabei durch einen Kontaktdraht oder auch eine Schleifverbindung gebildet sein. Beispielsweise ist das definierte Potential ein Erdungspotential.

Das Mittel zur Spreizung 10, bzw. der Klemmkörper 8 ist dabei aus Metall gebildet und mit dem definierten elektrischen Potential des Sensors 1 verbunden. Dadurch ist der metallische Befestigungskörper mit dem elektrischen Potential des Sensors 1 verbunden.

Der Sensor 1 gemäß Figur 3 weist optional an jedem Ende jeweils eine Befestigung mit einem Klemmkörper 8 auf, so dass der Sensor 1 an jedem Ende in der Befestigungsnut befestigt werden kann, wodurch eine stabilere und zuverlässigere Befestigung erzielt wird.

### Bezugszeichen:

- 1: Sensor
- 2: Sensorgehäuse
- 4: Befestigungsnut
- 6: Befestigungskörper
- 8: Klemmkörper
- 10: Mittel zur Spreizung
- 12: Spreizgewindestift
- 14: Spreizstift
- 16: Aufnahme
- 18: elektrische Verbindung
- 20: Leiterkarte
- 22: kegelförmiges Ende
- 24: kegelförmige Aufnahme
- 26: Spannbacken
- 28: Nutwand

## Patentansprüche

1. Sensor mit einem Sensorgehäuse (2), wobei das Sensorgehäuse (2) oder ein Teil des Sensorgehäuses (2) in eine Befestigungsnut (4) in einen metallischen Befestigungskörper (6) ragt zur Befestigung des Sensors (1), wobei an dem Sensorgehäuse (2) ein spreizbarer metallischer Klemmkörper (8) vorhanden ist, wobei der Klemmkörper zur Befestigung des Sensorgehäuses in der Befestigungsnut gebildet ist, wobei der Klemmkörper (8) Mittel zur Spreizung (10) aufweist, wobei die Befestigung durch Spreizung des Klemmkörpers erzielt ist, **dadurch gekennzeichnet, dass**
der Klemmkörper (8) mit einem definierten elektrischen Potential des Sensors (1) verbunden ist.

2. Sensor nach Anspruch 1, wobei das definierte Potential ein Erdungspotential ist.

3. Sensor nach einem der vorhergehenden Ansprüche, wobei das Mittel zur Spreizung (10) aus Metall ist und mit dem definierten elektrischen Potential des Sensor (1) verbunden ist.

4. Sensor nach einem der vorhergehenden Ansprüche, wobei das Mittel zur Spreizung (10) ein Spreizgewindestift (12) ist.

5. Sensor nach einem der vorhergehenden Ansprüche 1 bis 3, wobei das Mittel zur Spreizung (10) ein Spreizstift (14) ist.

6. Sensor nach einem der vorhergehenden Ansprüche, wobei die Befestigungsnut (4) U-förmig ausgebildet ist.

7. Sensor nach einem der vorhergehenden Ansprüche, wobei der Klemmkörper austauschbar angeordnet ist.

## Claims

1. A sensor having a sensor housing (2), wherein the sensor housing (2) or a part of the sensor housing (2) projects into a fastening groove (4) in a metallic fastening body (6) for fastening the sensor (1), wherein a spreadable metallic clamping body (8) is present at the sensor housing (2), wherein the clamping body is formed for fastening the sensor housing in the fastening groove, wherein the clamping body (8) has means for spreading (10), and wherein the fastening is achieved by spreading the clamping body,
**characterised in that**
the clamping body (8) is connected to a defined electrical potential of the sensor (1).

2. A sensor in accordance with claim 1, wherein the defined potential is an ground potential.

3. A sensor in accordance with one of the preceding claims, wherein the means for spreading (10) is composed of metal and is connected to the defined electrical potential of the sensor (1).

4. A sensor in accordance with any one of the preceding claims, wherein the means for spreading (10) is a spreading threaded pin (12).

5. A sensor in accordance with any one of the preceding claims 1 to 3, wherein the means for spreading (10) is a spreading pin (14).

6. A sensor in accordance with any one of the preceding claims, wherein the fastening groove (4) is configured in U shape.

7. A sensor in accordance with any one of the preceding claims, wherein the clamping body is arranged in a replaceable manner.

## Revendications

1. Capteur comprenant un outil de capteur (2), dans lequel le boîtier de capteur (2) ou une partie du boîtier de capteur (2) pénètre dans une gorge de fixation (4) dans un corps de fixation métallique (6) pour la fixation du capteur (1), dans lequel un corps de serrage métallique (8) susceptible d'être écarté est prévu sur le boîtier de capteur (2), ledit corps de serrage étant réalisé en vue de la fixation du boîtier de capteur dans la gorge de fixation, et ledit corps de serrage (8) comprend un moyen d'écartement (10), de sorte que la fixation est obtenue par écartement du corps de serrage,
**caractérisé en ce que**
le corps de serrage (8) est relié à un potentiel électrique défini du capteur (1).

2. Capteur selon la revendication 1, dans lequel le potentiel défini est un potentiel de terre.

3. Capteur selon l'une des revendications précédentes, dans lequel le moyen d'écartement (10) est en métal et est relié au potentiel électrique défini du capteur (1).

4. Capteur selon l'une des revendications précédentes, dans lequel le moyen d'écartement (10) est une tige filetée d'écartement (12).

5. Capteur selon l'une des revendications précédentes 1 à 3, dans lequel le moyen d'écartement (10) est une tige d'écartement (14).

6. Capteur selon l'une des revendications précédentes, dans lequel la gorge de fixation (4) est réalisée en forme de U.

7. Capteur selon l'une des revendications précédentes, dans lequel le corps de serrage est agencé de façon interchangeable.
